**Europäisches Patentamt**

**European Patent Office**

**Office européen des brevets**

(19)

(11) Veröffentlichungsnummer: **0 017 660**
**A1**

(12) **EUROPÄISCHE PATENTANMELDUNG**

(21) Anmeldenummer: **79103184.2**

(22) Anmeldetag: **29.08.79**

(51) Int. Cl.³: **B 30 B 1/34,** B 30 B 15/16,
B 30 B 7/04, B 21 J 7/14,
F 16 K 11/22

(30) Priorität: **17.04.79 FI 791227**

(71) Anmelder: **Lilibacka, Jorma, 62300 Härmä (FI)**

(43) Veröffentlichungstag der Anmeldung: **29.10.80**
**Patentblatt 80/22**

(72) Erfinder: **Lilibacka, Jorma, 62300 Härmä (FI)**

(84) Benannte Vertragsstaaten: **AT BE CH DE FR GB IT LU NL SE**

(74) Vertreter: **Späth, Helmut, Dipl.-Phys. Dr. rer. nat., Max-Josefs-Platz 6, D-8200 Rosenheim (DE)**

(54) **Hydraulikpresse.**

(57)   Die Erfindung schafft eine mit Druckfluid, vorzugsweise Hydraulikflüssigkeit, zu betreibende Presse mit mehreren Preßstempeln (2, 3), welche entweder radial auf ein gemeinsames Zentrum wirkend oder achsparallel angeordnet sind. Um zu erreichen, dass die Preßstempel hinsichtlich ihres Hubes genau synchronisiert werden, wird jeder Preßstempel über einen Zylinder (1, 21) beaufschlagt, dem jeweils eine eigene Steuerfläche (12, 25) zugeordnet ist. Die Steuerfläche bewegt sich hierbei im Betrieb senkrecht zu der Bewegungsrichtung der Preßstempel bzw. senkrecht zur Achse des Zylinders. Jeder Steuerfläche (12, 25) ist ein Hydraulikventil (5, 22) zugeordnet, das über einen eigenen Fühler (14, 26) die Steuerfläche (12, 25) abgetastet und während deren Bewegung das Druckfluid auf den betreffenden Zylinder (1, 21) verteilt. Jedes Hydraulikventil (5, 22) kann in bezug auf seine zugeordnete Steuerfläche (12, 25) gesondert justiert werden, so daß im Ergebnis sämtliche Preßstempel genau synchronisiert werden können. Dies wiederum bewirkt, daß bei einer Radialpresse das Werkstück genau konzentrisch gepreßt wird, während bei einer Axialpresse, beispielsweise einer Kantbank, wo mehrere Preßstempel einer Biegekante zugeordnet sind, eine unzulässige Verbiegung der Biegekante vermieden wird.

Jorma Lillbacka, Härmä, Finnland          77 P 26 EPA

0017660

- 1 -

Beschreibung
------------

Die Erfindung betrifft eine Presse, welche durch eine Zwischendrucksubstanz betätigt wird, beispielsweise Druckflüssigkeit, und welche zwei oder mehrere Arbeitszylinder aufweist, die in gleicher Richtung oder konzentrisch in Radialrichtung verschieblich sind, um ein Werkstück entweder auf der gleichen Linie oder konzentrisch in Radialrichtung zusammenzupressen, insbesondere im letzteren Fall, um Schlauchkupplungen an die Enden von Schläuchen zu pressen.

Die oben genannten Pressen werden beispielsweise zur Formung eines Werkstückes in Radialrichtung verwendet, insbesondere zum Zusammendrücken von Schlauchkupplungen an den Enden von Schläuchen. Diese Pressenart weist Preßorgane auf, die in Radialrichtung verschieblich sind und die Schlauchkupplung, welche an dem Ende des Schlauches sitzt und im Wirkungszentrum der Pressenorgane angeordnet ist, zusammendrückt, so daß der Durchmesser geringer wird und fest auf dem Ende des Schlauches sitzt, nachdem diese Organe einen Arbeitsgang ausgeführt haben. In analoger Weise kann eine Kantmaschine zwei oder mehrere Pressenorgane aufweisen, welche in gleicher Richtung verschieblich sind und auf einen Preßbalken angepaßt sind, um diesen so zu bewegen, daß der Balken gegen die Werkstückbasis gedrückt werden kann, wobei der zu bearbeitende Teil, beispielsweise eine zwischen diesen beiden Organen angeordnete Metallplatte, die Form aufweist, welche gewünscht wird. Die vorangehend erwähnten bekannten Radialpressen verwenden meist dasjenige Prinzip, bei welchem die in der Radialrichtung wirkenden Pressenorgane mechanisch angetrieben werden, beispielsweise so, daß ein Axialkraftzylinder konische oder keilförmige Flächen bewegt, welche während ihrer Bewegung die radialen Pressenorgane in Anlage zu den Flächen bringen. Dies ist in mancherlei Hinsicht ungünstig. Vor allem ist die Hublänge der Pressenorgane und entsprechend die Tiefe der Preßwirkung sehr gering. Dadurch wird es sehr schwierig, solche Teile zu pressen, deren Form in Radialrichtung heraustehende Teile, insbesondere Flansche, aufweist. In diesen Fällen müssen die Pressenorgane eine sehr große Öffnung und Preßbewegung aufweisen. Auch müssen die konischen oder keilförmigen Gleitflächen, welche die Axialbewegung in eine radiale Pressenbewegung umsetzen sollen, eine richtige Schmierung erhalten. Wenn diese Schmierung ausfällt, können dadurch leicht Beschädigungen wegen des großen Oberflächendrukkes entstehen, welcher in diesen Maschinen wirksam ist. Ferner können Störungen auftreten, wenn beispielsweise eine Rückzugfeder zwischen den radialen Pressenorganen gebrochen ist, wobei die Möglichkeit besteht, daß der entsprechende Preßvorgang eine Schrägflächenstellung aufweist, so daß erhebliche Beschädigungen an der Presse entstehen können.

Es versteht sich, daß der mechanisch arbeitende Teil der Maschine zu ersetzen ist, indem Kraftzylinder radial rund um das Werkstück anzuordnen sind, welches sich in dem Wirkungszentrum der Zylinder befindet. Alle Zylinder weisen einen Arbeitsbacken auf, welcher an dem Kopf des im Zylinder geführten Kolbens angebracht ist. Diese Backen bewirken die tatsächliche Arbeit. Jedoch besteht eine wesentliche Schwierigkeit darin, die Bewegung der Kolben so zu synchronisieren, daß alle sich um gleiche Längenabschnitte zur gleichen Zeit bewegen, um das Werkstück gleichförmig von jeder Seite zusammenzudrüken, so daß die durch den Preßvorgang hervorgerufene Deformation rund um den gesamten Umfang gleich ist. Dies trifft insbesondere für Schlauchkupplungen zu. Um die Bewegung der Zylinder zu synchronisieren, ist es möglich, zur Steuerung der Zylinder elektrohydraulische Stellventile bekannter Art zu verwenden. Diese Ventile verteilen die Zwischendrucksubstanz in die Zylinder in der Weise, daß die gewünschte Wirkung erreicht wird. Diese Art von Aufbau ist jedoch sehr aufwendig, weil jeder Zylinder sein eigenes Stellventil benötigt. Diese Ventile können darüber hinaus ziemlich leicht Störungen verursachen, insbesondere bei dem Einsatzgebiet, bei welchem sie zur Anwendung kommen.

Aufgabe der Erfindung ist es, die Schwierigkeiten bei der Synchronisation der Bewegung der Zylinder in einer Presse oder dergleichen zu lösen, welche mehrere radiale oder parallele Zylinder verwendet, um eine gleichförmige radiale oder parallele Preßwirkung zu erreichen, wobei Ventile, welche zuverlässig im Betrieb sind und einen einfachen Aufbau haben, zur Steuerung der Zylinder verwendbar sind. Erreicht wird dies durch die kennzeichnenden Merkmale des Patentanspruchs 1.

Gemäß dem wesentlichen Merkmal der Erfindung hat jeder Zylinder seine eigene keilförmige oder gekrümmt keilförmige Steuerfläche und bewegt sich hauptsächlich in der Querrichtung in Bezug auf die Wirkungsrichtung des Zylinders, wobei die Steuerfläche die Wirkung des jedem Zylinder zugeordneten Ventils steuert. Die Ventilspindel folgt der Steuerfläche mittels eines bestimmten Fühlorgans, wobei während der Bewegung der Steuerfläche das Ventil in der Weise betätigt, daß die Zwischendrucksubstanz in den Zylinder eintritt und der Hub des Kolbens der Änderung des radialen Abstandes der Steuerfläche während ihrer Bewegung folgt.

Durch den Erfindungsgegenstand ergibt sich der Vorteil, daß ein längerer Hub der Preßbacken im Vergleich zum Stand der Technik erzielt wird. Dies ermöglicht das Pressen solcher Teile, welche einen Flansch aufweisen oder ziemlich große radiale Abmessungen besitzen. Der zu pressende Teil ist während des Arbeitsvorganges besser zu sehen und zu beobachten. Wegen der großen Hublänge ist es möglich, die gleichen Backen für einen großen Bereich unterschiedlicher Durchmesser einzusetzen. Die Reibung ist sehr gering. Schwierigkeiten hinsichtlich der Schmierung treten nicht auf. Der Aufbau der Presse wird wesentlich einfacher.

Die Erfindung ist nachstehend anhand der Zeichnung näher erläutert. Es zeigen:

Fig. 1 ein Ausführungsbeispiel einer radialen Presse nach der Erfindung in schematischer Ansicht von vorn,

Fig. 2-4 unterschiedliche Ausführungsbeispiele eines Preßzylinders, eines Kolbens und eines Ventils, welche Bestandteile einer erfindungsgemäßen Presse bilden, im Längsschnitt,

Fig. 5 ein weiteres Ausführungsbeispiel einer erfindungsgemäßen Presse in Ansicht von vorn,

*wird

Fig. 6 ein Ausführungsbeispiel einer hydraulischen Schaltungsanordnung, welche einer erfindungsgemäßen Presse zugeordnet ist.

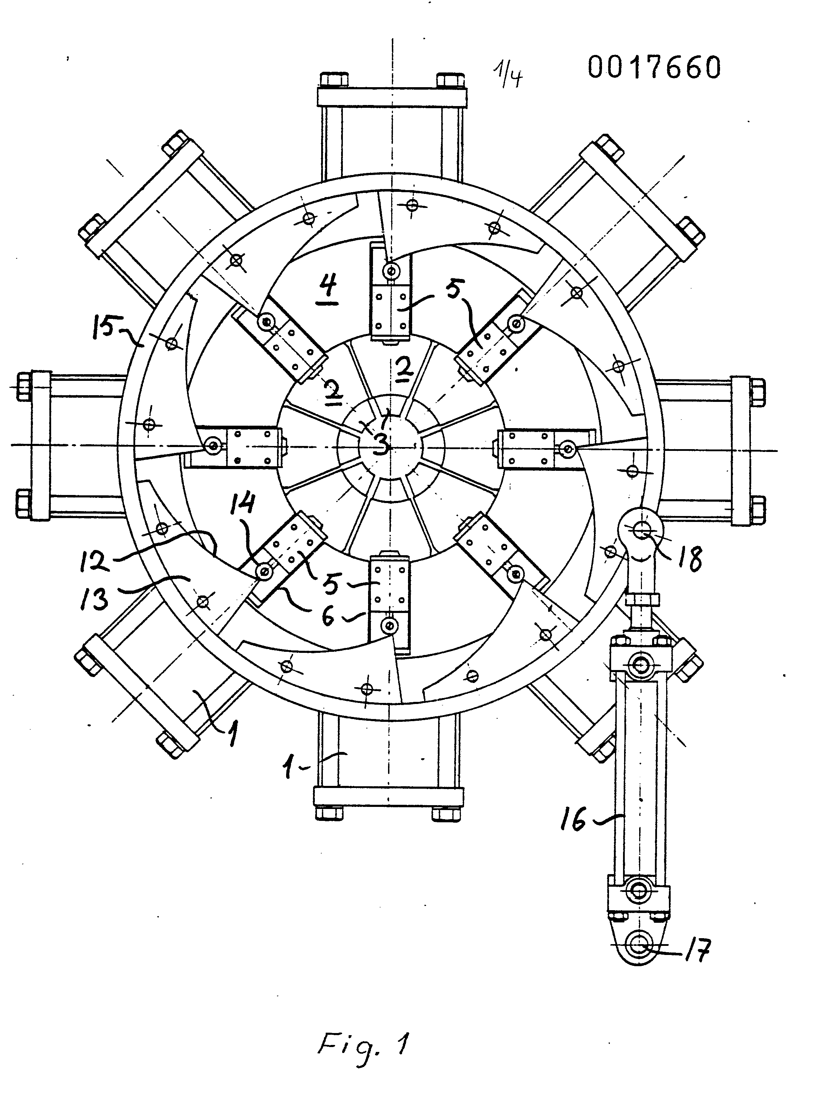

Gemäß Fig. 1 weist die dort veranschaulichte Presse
acht Zylinder 1 auf, welche in Radialrichtung wirken
und Basisbacken 2 aufweisen, jeweils in Zuordnung zu
Enden von Kolben, wobei Arbeitsbacken 3 an den Basisbacken 2 angeordnet sind. Die Zylinder 1 sind einem
kreisförmigen Gestell 4 zugeordnet. Einzelheiten dieser letztgenannten Anordnung sind in der Figur nicht
dargestellt. Die Kolbenstange, welche von dem Zylinder aus gegen den Wirkungsmittelpunkt reicht, ist
ebenfalls in Figur 1 nicht dargestellt. Ventile 5, welche die Zwischendrucksubstanz verteilen, sind dem Gestell 4 zugeordnet.

Die Ventile 5 sind den Kolbenstangen so zugeordnet,
daß sie sich mit diesen in Radialrichtung zu bewegen
vermögen. An der Vorderseite jedes Zylinders weist
das Gestell 4 radiale Öffnungen 6 auf, durch welche
die Ventile 5 teilweise aus der Vorderseite des Gestells herausragen. Fig. 2 zeigt schematisch den Zylinder 1, dessen Anordnung an dem Gestell 4 und einen
Kolben 6 sowie außerhalb desselben einen Kolben 7. Das
Ventil 5 ist der Kolbenstange durch einen Mittelteil 8
zugeordnet. Die Drucksubstanz wird von dem Ventil 5
zu dem Zylinder 1 über Kanäle 9, 10 zugeführt, welche
in der Kolbenstange angeordnet sind. Das kreisförmige
Gestell 4 ist an einem Maschinengestell 11 angebracht,
welches sich aus Fig. 2 lediglich teilweise ergibt.
Ein Maschinengestell dieser Art kann einen bekannten
Aufbau haben und möglicherweise eine bestimmte Art
von Auflage, Werktisch, Schrank oder Kasten, einen Antriebsmotor, Hydraulikpumpen, Ölbehälter, elektrische Schaltelemente u.dgl. sowie einen Aufnahmeraum für Werkzeuge u.dgl. enthalten. Um die Beschreibung zu vereinfachen, sind elektrische Leitungen und Hydraulikrohre in der Zeichnung nicht veranschaulicht.

Jeder Zylinder 1 ist in der Umfangsrichtung mit einem beweglichen Steuerorgan 13 versehen, welches eine gekrümmte keilförmige Steuerfläche 12 aufweist und die Wirkungsweise des Zylinders 1 in solcher Weise steuert, daß beim Vorbeilaufen des Organs 13 an dem Ventil 5 ein Fühlorgan 14 an der Spindel des Ventils der Steuerfläche 12 folgt und die Spindel so bewegt, daß vermöge entsprechender Steuerung des Ventils 5 der Kolben sich gegen das Wirkungszentrum oder seitwärts hiervon in der Bewegungsrichtung des Steuerorgans 13 bewegt. Die Spindel des Ventils weist eine Feder auf, welche das Fühlorgan 14 ständig in Berührung mit der Steuerfläche 12 hält. Bei dem veranschaulichten Ausführungsbeispiel sind die Steuerorgane 13 einschließlich der Steuerflächen 12 einem kreisförmigen Halter 15 zugeordnet, wobei diese Organe eine gleiche Unterteilung aufweisen. Dieser Halter 15 ist an dem Gestell mittels Lagern so angebracht, daß er leicht konzentrisch rund um das Druckzentrum drehbar ist. Um den kreisförmigen Halter 15 zu drehen, ist ein Kraftzylinder 16 so angeordnet, daß das andere Ende desselben an das Gestell an einer Stelle 17 angelenkt ist, während der Kopf des Kolbens des Zylinders an einen Zapfen 18 angelenkt ist, der dem Halter 15 zugeordnet ist. Die Länge des Hubes des Zylinders wird so gewählt, daß es möglich ist, eine genügend lange Bewegung der Steuerflächen auszuführen.

Fig. 2 zeigt den kreisförmigen Halter 15 in Anbringung an dem Gestell 4 mit Lagern in einer Schnittansicht. Auch das Steuerorgan 13, das an dem Halter 15 angeordnet ist, ist deutlich zu sehen. Oberhalb des Ventils befindet sich eine Justierschraube 19, um das Fühlorgan 14 zu justieren. Auf diese Weise ist es möglich, den Hub des Druckzylinders sehr genau einzustellen, indem beispielsweise eine Meßuhr verwendet wird, so daß die Hublänge jedes Zylinders genau steuerbar ist, um die gleiche Preßlänge zu erhalten. Der eine Ringform aufweisende Halter 15 ist an dem Gestell 4 so angebracht, daß er leicht rundum mit Hilfe einer Gleitberührung oder Rollenlagern drehbar ist.

Die Arbeitsbacken 3 und die Basisbacken 2 sind an den Enden der Kolbenstangen durch bekannte Schnellverriegelungseinrichtungen verbunden, so daß die Backen bei Bedarf leicht ausgetauscht werden können.

Bei Inbetriebnahme der Presse wird die Kreisbewegung des Halters 15 eingeleitet, wobei die Kreisbewegung durch den Zylinder 16 herbeigeführt wird. Hierbei bewegen sich die Steuerorgane 13 mit dem Halter 15, wobei die Fühlorgane 14, welche zu den Ventilen 15 der Druckzylinder gehören, der Steuerfläche 12 folgen. Dies bewirkt eine entsprechende Steuerwirkung auf die Spindeln der Ventile, so daß die Druckzylinder einen Arbeitsgang ausführen können. Fig. 1 zeigt die Stellung der Kolben, wenn sie sich an dem Ende des Preßhubes befinden. Wenn der Steuerzylinder 16 in Betrieb gesetzt wird, dreht er den Haltering 15 in Gegenuhrzeigerrichtung, so daß sich die Kolben der Preßzylinder seitlich gegenüber dem Mittelpunkt bewegen. Das zu bearbeitende Werkstück wird in den Wirkungsmittelpunkt gedrückt. Wenn wiederum der Zylinder 16 beaufschlagt wird, dreht sich der Haltering in Uhrzeigerrichtung, so daß die Preßkolben eine Preßbewegung ausführen.

Anstelle des Zylinders 16 kann zur Drehung des Halters 15 auch eine andere Einrichtung verwendet werden, beispielsweise ein Motor, Getriebe, ein Kurbeltrieb oder ein anderer Antriebsmechanismus.

Die Preßzylinder und ihre Steuerung können in unterschiedlicher Weise ausgeführt sein. Wie sich aus Fig. 1 und 2 ergibt, sind die Zylinder fest, während sich die Kolben 6 bewegen, so daß die Steuerventile an der Vorderseite der Kolben derart angebracht sind, daß die Verteilerkanäle 9, 10 für die Zwischendrucksubstanz von dem Ventil durch die Kolbenstange in den Zylinder führen. Dieser Aufbau hat den Vorteil, daß die Steuerorgane mit ihren Halteeinrichtungen innerhalb eines ziemlich kleinen Durchmessers untergebracht werden können.

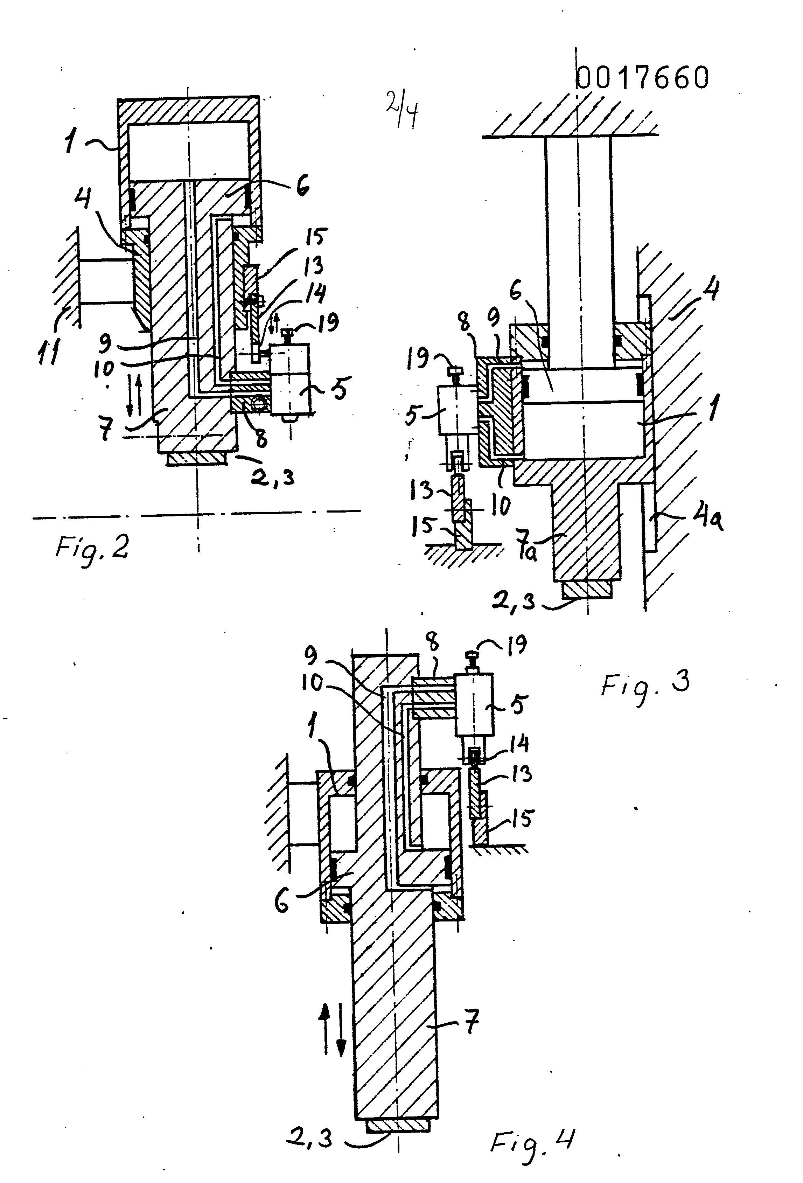

Bei dem Aufbau nach Fig. 3 ist der Kolben fest, wogegen sich die Zylinder 1 bewegen können; das Ventil 5 ist an dessen Seite angeordnet. Der Zylinder 1 kann sich längs Führungen 4a bewegen, die zu dem Gestell 4 gehören. Das Steuerorgan 13 ist an dem Halter 15 angebracht, welcher Lager zwischen sich und dem Gestell in der gleichen Weise wie bei dem vorangehenden Ausführungsbeispiel bewegt.

Bei dem Ausführungsbeispiel nach Fig. 4 stehen beide Enden des Kolbens 6 aus den Stirnseiten des Zylinders vor. Das Ventil 5 ist derjenigen Kolbenstange zugeordnet, welche der Arbeitsseite gegenübersteht. Das Steuerorgan 13 ist an dem Halter 15 angebracht und bewegt sich mit dem Gestell. Dieser Aufbau ergibt eine lange freie Kolbenstange, wobei die Steuerorgane die Sicht nicht beschränken.

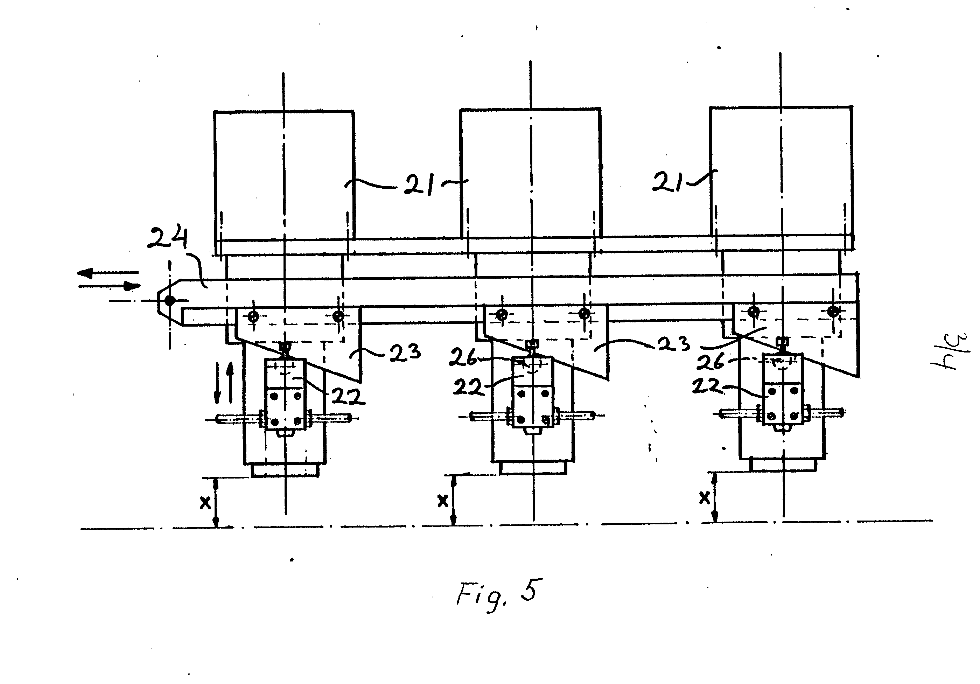

Die erfindungsgemäße Presse kann auch so ausgeführt sein, daß einige Zylinder 21 Seite an Seite parallel gestellt sind und in der gleichen Richtung wirken, wobei sie möglicherweise dem gleichen Preßstempel oder dem gleichen Preßwerkzeug zugeordnet sind, wie sich dies aus Fig. 5 ergibt. Organe 23 steuern Ventile 22 der Zylinder und sind beim betrachteten Ausführungsbeispiel keilförmig sowie einem geradlinigen Stempel 24 zugeordnet, welcher mittels eines Kraftzylinders in der gleichen Weise bewegbar ist, wie dies im vorangehenden Ausführungsbeispiel beschrieben wurde. Auf diese Weise können verhältnismäßig lange Gruppen von Zylindern in der gleichen Presse angewendet werden, beispielsweise bei Kantbänken, wobei die Biegung des Preßbalkens nicht so schädlich wirkt, wie bei den bekannten Pressen. Es ist nicht notwendig, den Preßbalken und das Gestell der Maschine schwer auszuführen, um eine Biegung zu vermeiden. Daher wird der Aufbau der Maschine wesentlich leichter. Es ist möglich, den Haltebalken 24 der Steuerorgane in solcher Weise aufzuhängen und zu lagern, daß die Preßkräfte ihn nicht biegen, so daß die Zylinder genau gesteuert werden können und auch ein langer Preßbalken gerade bleibt. Um das Beispiel in der Darstellung zu vereinfachen, sind in Fig. 5 lediglich drei Zylinder veranschaulicht, jedoch können, wie sich versteht, wesentlich mehr Zylinder vorgesehen sein.

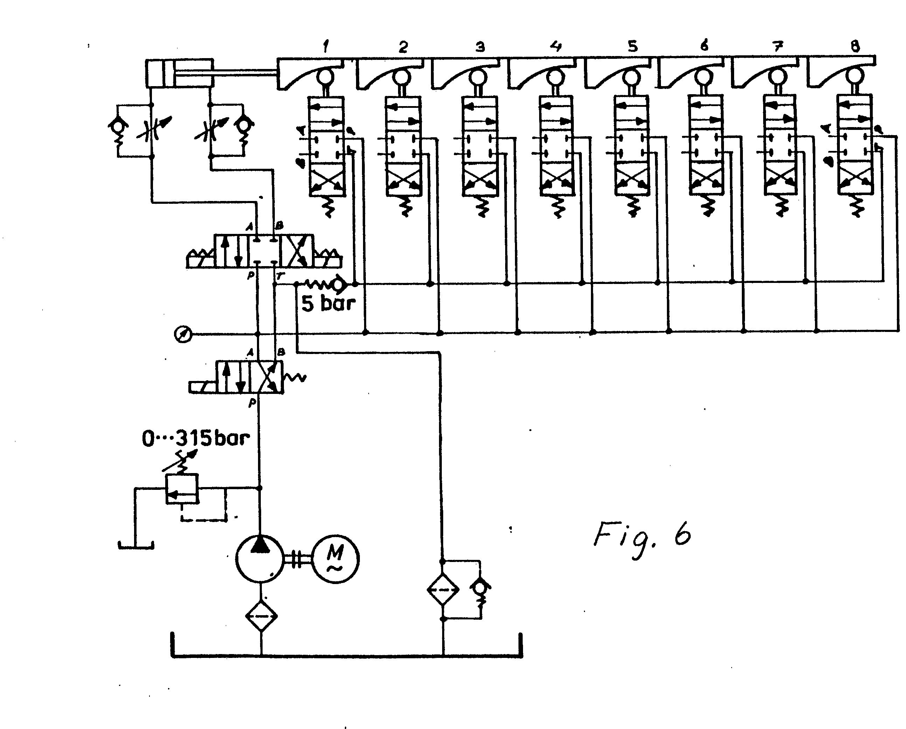

Fig. 6 zeigt die Hydraulikanordnung, welche der Radialpresse und der geradlinigen Presse zugeordnet sein
kann.

Patentaⁿⁿⁿⁿⁿ
Dr. Halmut Spöth
8200 Rosenheim / Obb.
Max-Josefs-Platz 6
Deutschland

0017660

77 P 26 EPA


Jorma Lillbacka, SF-62300 Härmä, Finnland

------------------------------------------------------

Hydraulikpresse

------------------------------------------------------


Patentansprüche
-----------------

1. Mit einer Zwischendrucksubstanz, insbesondere Flüssigkeit, zu betreibende Presse mit zwei oder mehreren Arbeitszylindern, welche in der gleichen Richtung oder konzentrisch in Radialrichtung verlaufend angeordnet sind, um ein Werkstück entweder in einer Richtung oder konzentrisch in Radialrichtung gleichzeitig durch mehrere Zylinder zu beaufschlagen, wobei jeder Zylinder ein Ventil aufweist, welches Druckflüssigkeit in den Zylinder verteilt, dadurch gekennzeichnet, daß jeder Zylinder (1, 21) eine eigene keilförmig oder dergleichen gestaltete Steuerfläche (12, 25) aufweist, welche überwiegend in Querrichtung zu der Wirkungsrichtung des Zylinders beweglich ist und welche zur Steuerung des jedem Zylinder zugeordneten Ventils (5, 22) eingerichtet ist, wobei die Spindel des Ventils der Steuerfläche mittels eines Fühlorganes (14, 26) zu folgen vermag, und daß durch die Bewegung der Steuerfläche das Ventil im Sinne einer Einleitung der Zwi-

Jorma Lillbacka, Härmä, Finnland　77 P 26 EPA

**0017660**

- 2 -

schendrucksubstanz in den Zylinder gesteuert ist, so daß der Hub des in dem Zylinder geführten Kolbens der Änderung des radialen Abstandes der Steuerfläche während ihrer Bewegung zu folgen vermag.

2. Presse nach Anspruch 1, dadurch gekennzeichnet, daß die Steuerflächen (12, 25) an keilförmigen oder gleichartigen Steuerorganen (13, 23) ausgebildet sind, welche einem Halter (15, 24) zugeordnet sind, der sich längs eines Gestells bewegt, wobei die Steuerorgane eine gleiche Unterteilung aufweisen.

3. Presse nach einem der Ansprüche 1 oder 2, dadurch gekennzeichnet, daß der Halter (15) vorzugsweise die Form eines Ringes aufweist, wobei die Zylinder (1) in Bezug auf deren Wirkungszentrum radial angeordnet sind, wobei der Halter an dem Gestell mittels Lagern so angeordnet ist, daß er konzentrisch rund um den Preßmittelpunkt drehbar ist.

4. Presse nach einem der Ansprüche 1 oder 2, dadurch gekennzeichnet, daß der Halter (24) ein vorzugsweise geradliniger Balken ist, wobei zugeordnete Zylinder parallel sowie vorzugsweise in Querrichtung des Balkens ausgerichtet sind, und daß die Steuerorgane (23) dem Balken an jedem Zylinder zugeordnet sind.

5. Presse nach einem der Ansprüche 1-4, dadurch gekennzeichnet, daß der Halter (15, 24) durch eine Einrichtung (16) bewegt ist.

6. Presse nach einem der Ansprüche 1-5, dadurch gekennzeichnet, daß das Fühlorgan (14, 26), welches der Steuerfläche (12, 25) folgt, in Längsrichtung gegenüber der
Spindel des Ventils (5, 22) einstellbar ist.

*Fig. 1*

0017660

Fig. 2

Fig. 3

Fig. 4

Fig. 5

24

21    21

23    23
26    26
22    22

x    x

3/4

0017660

Fig. 6

1 2 3 4 5 6 7 8

5 bar

0···315bar

M

4/4

0017660

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | CH - A - 542 008 (VON ROLL A.G.)<br><br>* Insgesamt *<br><br>-- | 1 |
| A | US - A - 3 451 249 (W.J. SHARON)<br><br>* Insgesamt *<br><br>-- | 1 |
| A | GB - A - 1 054 184 (THE GARRETT CORP.)<br><br>* Seite 4, Zeilen 28-45; Figur 7 *<br><br>-- | 1 |
| A | GB - A - 1 365 032 (J. HAAMANN HEBE- UND TRANSPORT-TECHNIK)<br><br>* Insgesamt *<br><br>---- | 1 |

**KLASSIFIKATION DER ANMELDUNG (Int.Cl. 3)**

B 30 B    1/34
           15/16
           7/04
B 21 J    7/14
F 16 K   11/22

**RECHERCHIERTE SACHGEBIETE (Int. Cl. 3)**

B 30 B
B 21 J
F 16 K
G 05 B
B 66 F
H 01 R

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-06-1980 | BOLLEN |

EPA form 1503.1   06.78